# EUROPÄISCHE PATENTANMELDUNG

(11) **EP 1 225 316 A2**
(43) Veröffentlichungstag der Anmeldung: **24.07.2002**
(21) Anmeldenummer: 02001414.8
(22) Anmeldetag: 21.01.2002
(51) Int. Cl.: F01N 11/00, F01N 9/00

(54) **Vorrichtung im Abgassystem eines Verbrennungsmotors zur Prüfung der Belastung des Abgasstroms mit Russpartikeln**

(30) Priorität: 19.01.2001 DE 10102491
(71) Anmelder: Hofmann, Walter, 68542 Heddesheim (DE)
(72) Erfinder: Hofmann, Walter, 68542 Heddesheim (DE)
(74) Vertreter: Lemke, Jörg-Michael, Dipl.-Ing.

(57) **Zusammenfassung**

Bei einer Vorrichtung im Abgassystem eines Verbrennungsmotors, insbesondere eines solchen mit Abgasrückführung, zur Prüfung der Belastung des Abgasstroms (1) mit Rußpartikeln, insbesondere zur Prüfung der Wirksamkeit eines dem Abgasstrom (1) ausgesetzten Rußpartikelfilters, mit einem Sensor (4), ist der Sensor (4) ein vor oder hinter einem Rußpartikelfilter, falls ein solcher vorhanden ist, vom Abgasstrom (1) beaufschlagter, sich in Abhängigkeit von der Dauer des Motorenbetriebs immer stärker mit Rußpartikeln bedeckender, temperaturabhängiger Widerstand in Form eines Heißleiters oder eines Kaltleiters.

## Beschreibung

Die Erfindung betrifft eine Vorrichtung im Abgassystem eines Verbrennungsmotors, insbesondere eines solchen mit Abgasrückführung, zur Prüfung der Belastung des Abgasstroms mit Rußpartikeln, insbesondere zur Prüfung der Wirksamkeit eines dem Abgasstrom ausgesetzten Rußpartikelfilters, mit einem Sensor.

Aus der DE 199 59 955 A1 ist eine Vorrichtung bekannt, bei welcher der Sensor ein Drucksensor ist, der sich in einer Druckleitung befindet, die einerseits vor einem Rußpartikelfilter und andererseits nach dem Rußpartikelfilter an die Abgasleitung des Verbrennungsmotors angeschlossen ist. Mit dem allmählichen Zusetzen des Filters bzw. dessen Beladung mit Rußpartikeln steigt der Abgasgegendruck. Der Drucksensor mißt die steigende Druckdifferenz und löst bei Überschreiten eines Grenzwertes die Regenerierung des Filters aus, dadurch nämlich, daß der Filter auf solche Temperaturen aufgeheizt wird, bei denen der Ruß verbrennt. Es wurde auch bereits zusätzlich ein unmittelbar vor dem Rußpartikelfilter angeordnetes Thermometer verwendet, da Motorlaufversuche zeigten, daß bei bekannten Lastfällen wie definierter Gaspedalstellung oder definierter Luftmasse im Ansaugtrakt ein sich mit Rußpartikeln beladender Filter die Abgastemperatur vor dem Filter durch Rückstaueffekte beeinflußt.

Dabei traten dennoch Fälle auf, bei denen der Rußpartikelfilter versagte, ohne daß dies eindeutig von der erläuterten Sensorik erkannt wurde. Dabei wurde dann der Rußpartikelfilter weit über das zulässige Maß hinaus beladen, wobei sich bei einer Regenerierung Temperaturen von weit über 1000°C ergaben. In diesem Temperaturbereich ist das in der Regel verwendete Filtermaterial Siliziumkarbid jedoch extrem stoßempfindlich und brüchig. Ein eventueller Bruch läßt sich jedoch nicht ohne weiteres bemerken, da der Rußpartikelfilter in hitzeabsorbierendem Material eingebettet zu sein pflegt. Vielmehr können Längs- und/ oder Querrisse auftreten, die nicht in jedem Falle festgestellt werden können. Im Falle eines oder mehrerer solcher Risse entweichen jedoch ungefilterte Abgase, die dazu führen, daß die Abgasvorschriften für das betreffende Fahrzeug nicht mehr erfüllt werden.

Ferner läßt sich die bekannte Vorrichtung, ob nun mit einem oder ohne ein zusätzliches Thermometer, in dem Fall nicht einsetzen, in welchem es an einem Rußpartikelfilter fehlt und nur die Belastung des Abgasstroms mit Rußpartikeln festgestellt werden soll, nämlich deshalb, weil der Drucksensor keine Druckdifferenz messen kann, wie sie ja nur vor und hinter einem Filter aufzutreten pflegt.

Die der Erfindung zugrundeliegende Aufgabe wird deshalb darin gesehen, eine Vorrichtung der eingangs genannten Art zu schaffen, die in der Lage ist, nicht nur die Belastung des Abgasstroms mit Rußpartikeln zu prüfen, und zwar auch des Abgasstroms, der unmittelbar vom Motor kommt, sondern auch des aus einem Rußpartikelfilter austretenden Abgasstroms, wobei die erfindungsgemäße Vorrichtung dann dazu dienen kann, den Zeitpunkt zu bestimmen, zu dem ein Rußpartikelfilter auszustauschen ist. Es versteht sich, daß im Falle eines regenerationsfähigen Rußpartikelfilters, wie beim Stand der Technik, durch die Erfindung auch eine solche Regeneration ausgelöst bzw. deren Erfordernis angezeigt werden kann.

Diese Aufgabe wird nun erfindungsgemäß dadurch gelöst, daß der Sensor ein vor oder hinter einem Rußpartikelfilter, falls ein solcher vorhanden ist, vom Abgasstrom beaufschlagter, sich in Abhängigkeit von der Dauer des Motorenbetriebs immer stärker mit Rußpartikeln bedeckender, temperaturabhängiger Widerstand in Form eines Heißleiters oder eines Kaltleiters ist.

Heißleiter sind Widerstände mit einem negativem Temperaturkoeffizienten, sogenannte NTC-Widerstände, deren Widerstand mit zunehmender Temperatur geringer wird, während Kaltleiter sogenannte PTC-Widerstände sind, deren Widerstand mit zunehmender Temperatur größer wird. Letztlich kommt es für die Zwecke der vorliegenden Erfindung nur auf die Widerstandsänderung an, unabhängig davon, ob eine Temperaturerhöhung des Widerstands nun zu einer Vergrößerung oder einer Verringerung des Widerstandswertes führt. Dabei versteht es sich, daß bei einem bestimmten, an den Widerstand angelegten, Strom sich eine Temperaturerhöhung ergibt, die umso größer ist, je größer bzw. dicker die Beladung des Widerstands bzw. Sensors mit Rußpartikeln und damit die Isolationswirkung der sich bildenden Rußpartikelschicht ist, die sich im Laufe der Zeit aufbaut. Das Entstehen einer solchen Rußpartikelschicht auf dem Widerstand bzw. Sensor, der im Abgasstrom angeordnet ist, ist unabhängig davon, ob ein Rußpartikelfilter vorgeschaltet ist oder nicht. Zweckmäßig wird die Einbaulage des Sensors jedoch in jedem Fall so getroffen, daß eine möglichst große Fläche desselben mit Abgasen beaufschlagt wird.

Als Heißleiter bzw. NTC-Widerstände sind beispielsweise Thermistoren, als Kaltleiter bzw. PTC-Widerstände Platin-Temperatur-Meßwiderstände, Nickelmeßwiderstände, Silizium-Temperatur-Sensoren und allgemein PTC-Temperatur-Sensoren, wie die sogenannten KTY (Warenzeichen der Siemens AG), angezeigt.

Zweckmäßig ist eine Auswertelektronik vorgesehen zur Messung und zur Überwachung der mit zunehmendem Rußpartikelbelag und damit zunehmender Wärmeisolation sich ändernden Temperaturbzw. Widerstandswerte des Sensors und, bei Vorhandensein eines Rußpartikelfilters, zur Anzeige des Erfordernisse eines Austausches desselben bei Erreichen eines vorgegebenen Maximalbzw. Minimal-Widerstandswerts des Sensors einerseits und der Regenerierung des Sensors durch Reinigung andererseits, oder, falls kein Rußpartikelfilter vorgeschaltet ist, zur Nachregelung der Abgasrückführungsrate und/oder des Einspritzdrucks.

Die erfindungsgemäße Vorrichtung läßt sich vorteilhaft im Rahmen eines OBD-Systems (On-Board-Diagnosis-System) verwenden, wie es für neu zugelassene Kraftwagen mit Dieselmotor ab dem Jahr 2003 obligatorisch ist, um eine einwandfreie Funktion der Abgasreinigungsvorrichtung zu gewährleisten. Die Partikelgrenzwerte für Personenkraftwagen mit Dieselmotor liegen derzeit bei 0,05 g/km (Euro 3) und werden voraussichtlich ab dem Jahre 2005 nochmals halbiert werden (Euro 4).

Ein erfindungsgemäßes Verfahren zum Betrieb der erfindungsgemäßen Vorrichtung besteht darin, daß bei stillstehendem Motor und nach einer vorbestimmten Abkühlungszeit des Abgassystems der Sensor auf eine vorbestimmte Ausgangstemperatur aufgeheizt und dann mit einem bestimmten Stromimpuls beaufschlagt, sein Widerstandswert nach einer bestimmten Zeitspanne gemessen und derselbe mit einem gespeicherten Widerstandsbasiswert des unbelegten Sensors verglichen wird, wobei die Differenz der Werte als ein Maß für den Rußpartikelbelag auf dem Sensor und damit als ein Maß entweder für die Partikelbelastung des unmittelbar vom Motor kommenden Abgasstroms oder für den Belegungsgrad und damit die nachlassende Wirksamkeit eines vorhandenen Rußpartikelfilters verwendet wird, wobei eine vorbestimmte Größe der Differenz der Werte einen gegebenenfalls erforderlichen Austausch des Rußpartikelfilters einerseits und/oder eine erforderliche Regenerierung des Sensors andererseits anzuzeigen geeignet ist.

Der Sensor wird zweckmäßig regeneriert und dabei vom Rußpartikelbelag gereinigt, sobald der Rußpartikelfilter erneuert bzw. seinerseits gereinigt bzw. regeneriert werden muß.

Vorteilhaft wird zur Reinigung der Sensor durch Anlegen eines dazu ausreichenden Stromes auf eine Temperatur aufgeheizt, bei welcher die anhaftenden Rußpartikel abbrennen und veraschen. Die Bestimmung des Aufheizungsstromes für den Sensor erfolgt dabei zweckmäßig nach Maßgabe des Vorhandenseins oder des Nichtvorhandenseins einer Additivierung des Kraftstoffes im Fahrbetrieb und der in Abhängikeit davon zu erreichenden Verbrennungstemperatur.

Vorzugsweise wird nach einer Regenerierung des Sensors sein dann vorhandener Widerstandsbasiswert zusammen mit einem entsprechend geänderten Maximal- bzw. Minimalwiderstandswert neu gespeichert, z.B. in der erwähnten Auswerteelektronik.

Die Erfindung wird im folgenden anhand eines in der Zeichnung schematisch dargestellten Ausführungsbeispiels näher erläutert.

Es zeigt:
Fig. 1 die Anordnung eines Sensors im Abgasrohr in schematischer Darstellung;
Fig. 2 den zeitlichen Verlauf von Bestromung (I), elektrischer Widerstandsänderung ® und Oberflächentemperatur (T) eines Sensors mit PTC-Charakteristik (Kaltleiter) während einer Messung;
Fig. 3 den zeitlichen Verlauf von Bestromung (I), elektrischer Widerstandsänderung (R) und Oberflächentemperatur (T) eines Sensors mit NTC-Charakteristik (Heißleiter) während einer Messung.

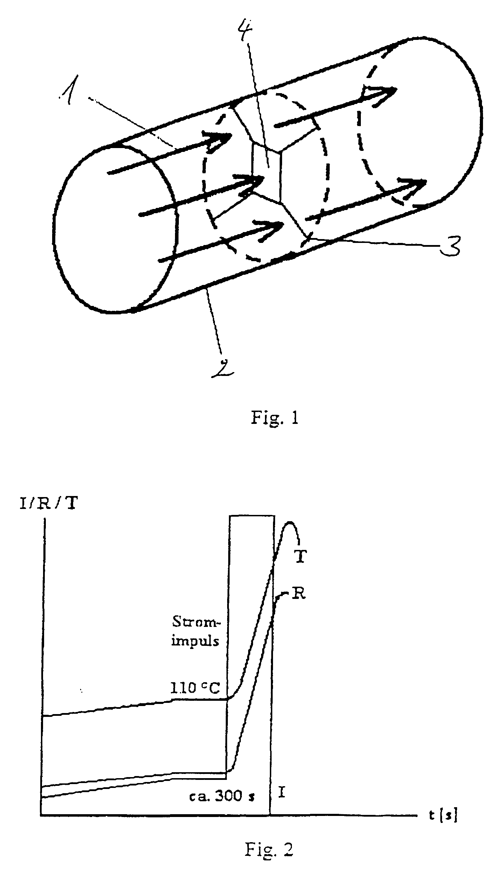

Wie in Fig. 1 angedeutet, ist im Abgasstrom 1 eines Abgasrohrs 2 eines nicht näher dargestellten Abgassystems mittels einer nicht näher erläuterten Aufhängung oder anderweitigen Befestigung 3 ein erfindungsgemäßer Sensor 4 angeordnet, der mit einer nicht gezeigten Auswerteelektronik verbunden ist.

Eine OBD startet nun erfindungsgemäß eine definierte Zeitspanne, beispielsweise 300 Sekunden, nach dem Abstellen des Motors. Dies ist erforderlich, um die Temperatur in dem Abgasrohr 2 unter einem definierten Temperaturwert, beispielsweise 110°C, sinken zu lassen. Die von den Abgasgrenzwerten limitierten Partikel bestehen aus feuchten und trockenen Anteilen. Die trockenen Anteile sind überwiegend C-und HC-Verbindungen, nämlich sogenannte Rußpartikel, die mit der erfindungsgemäßen Vorrichtung nebst Verfahren festgestellt werden. Bei den erfindungsgemäß als Heißleiter oder Kaltleiter ausgebildeten Sensoren 4 hängt der jeweilige Widerstandswert von der Temperatur ab. Mittels Widerstandsmessung wird geprüft, ob der oben genannte Temperaturwert als definierte Grenztemperatur unterschritten wird. Ist dies noch nicht der Fall, wird eine erneute Prüfung nach festgelegten Zeitintervallen periodisch wiederholt, bis diese Grenztemperatur unterschritten wird.

Wird die Grenztemperatur unterschritten, wird der Sensor 4 auf einen konstanten Widerstandswert, einen sogenannten Startwert, aufgeheizt, welcher einer Temperatur oberhalb der Umgebungstemperatur und zweckmäßig auch oberhalb des Siedepunktes der feuchten Anteile von Partikeln entspricht, z.B. 110°C, um einen stets identischen Startwert zu erhalten. Dieser Startwert wird bei den erfindungsgemäßen Sensoren 4 durch Aufheizen mittels Schließen eines Stromkreises durchgeführt.

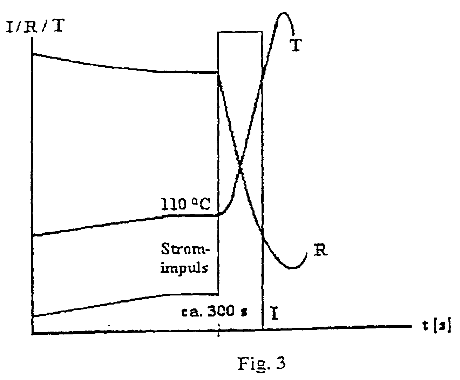

Nach Erreichen des Startwerts erfolgt ein geeigneter, stets identischer Stromimpuls, in den Fig 2 und 3 mit I bezeichnet, der den Sensor 4 zwar aufheizt, die vorhandenen Partikel jedoch nicht verbrennt. Nach einem festgelegten Zeitpunkt unmittelbar nach dem Aufheizen liegen sowohl ein bestimmter Temperaturwert als auch ein bestimmter Widerstandswert vor. Diese Werte werden in einen Speicherchip als Bestandteil der Auswerteelektronik eingespeichert, sozusagen beim ersten Aufheizen, und stellen Temperatur- bzw. Widerstandsbasiswerte dar. Der Temperaturbasiswert liegt jeweils auf den Kurven T, der Widerstandsbasiswert jeweils auf den Kurven R (siehe die Fig. 2 und 3).

Im Fahrbetrieb setzt sich der Sensor 4 durch seine Anordnung im Abgasstrom 1 mit Rußpartikeln zu, d.h. es bildet sich durch Adhäsion ein immer dicker werdender Rußpartikelbelag auf dem Sensor 4. Durch seine sich daraus ergebende Isolation verändern sich die Aufheizeigenschaften des Sensors 4 über die Zeit, derart, daß sich beispielsweise bezüglich des Widerstands ein mit der Zeit höherer oder niedrigerer Wert ergeben wird. Nach Erreichen eines bestimmten Maximal- oder Minimalwerts, je nachdem, ob nun ein Widerstand mit NTC- oder mit PTC-Charakteristik verwendet wird, kann dann beim nächsten Motorstart eine Warnlampe den Fahrer beispielsweise darüber informieren, daß das Reinigungssystem nicht mehr vorschriftsmäßig arbeitet und eine Regenerierung erforderlich ist, beispielsweise das Auswechseln eines Rußpartikelfilters.

Sobald das Abgasreinigungssystem bzw. ein Partikelfilter zu überholen, zu regenerieren bzw. zu erneuern ist, ist auch der Sensor 4 zu regenerieren bzw. vom Rußpartikelbelag zu reinigen. Hierzu wird der Senor 4 durch Schließen eines Stromkreises gezielt auf Temperaturen erhitzt, welche die anhaftenden Rußpartikel abbrennen und veraschen lassen. Dies kann je nach Beschaffenheit des Abgases, beispielsweise mit oder ohne Additivierung im Fahrbetrieb, zu unterschiedlichen Temperaturen erfolgen. Bei Additivierung (dosierte Zugabe eines Verbrennungsförderers zum Kraftstoff) reicht in der Regel ein einmaliges Aufheizen auf ca. 450°C aus, um anhaftende Partikel abzubrennen. Bei nichtadditiviertem Betrieb sind wesentlich höhere Temperaturen erforderlich, teilweise bis etwa 1000°C. Vor allem im letztgenannten Fall ist es möglich, daß durch Gefügeumwandlungen die elektrische Kennlinie des Sensors 4 verschoben wird. Daher sollte in einem solchen Falle nach Erkalten des Sensors 4 eine Neuprogrammierung der Auswerteelektronik erfolgen, wie bei der ersten Auslieferung des entsprechenden Kraftfahrzeugs. Das bedeutet, daß der Sensor 4 auf den Startwert erwärmt, dann mittels eines definierten Stromimpulses schlagartig erhitzt und der neu erhaltene Temperaturendwert und/oder Widerstandsendwert erneut im ROM (Read-Only-Memory) der Auswerteelektronik abgespeichert wird bzw. werden.

Bei einer bevorzugten Ausführungsform wurde als Sensor 4 ein Dünnschicht-Meßwiderstand auf Platinbasis mit der Bezeichnung Pt 6,8 des Herstellers Heraeus-Sensor-Nite verwendet, der sich wegen seines geringen Grundwiderstandes besonders gut für das Aufheizen eignet. Ein gewisser Nachteil besteht nur in seinem verhältnismäßig geringen Signalhub, der lediglich die Schaltung der Auswerteelektronik etwas komplexer werden läßt. Seine relevanten Widerstandswerte sind wie folgt:

| | | |
|---|---|---|
| 0°C | 6,8 Ohm | |
| 110°C | 9,7 Ohm | Startwert |
| 320°C | 14,9 Ohm | Zielwert für die Messung |
| 500°C | 19,1 Ohm | Regenerierung |

Bei Verwendung eines solchen Sensors 4 liegt zwischen Startwert und Signalwert nur ein Signalhub von 5,2 Ohm. Daher geht man zweckmäßigerweise bis unmittelbar an die Grenze, bei der mit Additiv versehene Rußpartikel noch nicht abbrennen und damit womöglich eine ungewollte Regenerierung auslösen. Zum Regenerieren wird man die maximal zulässige Temperatur des Pt-Widerstands von 500°C ausnutzen. Die maximal zulässige Strombelastung liegt bei 200 mA. Der notwendige Stromimpuls wird von der Wärmeleitung des jeweiligen Sensorgehäuses mitbestimmt. Es wird eine Zeit zur Aufheizung von 110°C auf 320°C von ungefähr 500 ms bei maximal 200 mA erwartet.

## Patentansprüche

1. Vorrichtung im Abgassystem eines Verbrennungsmotors, insbesondere eines solchen mit Abgasrückführung, zur Prüfung der Belastung des Abgasstroms (1) mit Rußpartikeln, insbesondere zur Prüfung der Wirksamkeit eines dem Abgasstrom (1) ausgesetzten Rußpartikelfilters, mit einem Sensor (4),
**dadurch gekennzeichnet, daß**
der Sensor (4) ein vor oder hinter einem Rußpartikelfilter, falls ein solcher vorhanden ist, vom Abgasstrom (1) beaufschlagter, sich in Abhängigkeit von der Dauer des Motorenbetriebs immer stärker mit Rußpartikeln bedeckender, temperaturabhängiger Widerstand in Form eines Heißleiters oder eines Kaltleiters ist.

2. Vorrichtung nach Anspruch 1,
**dadurch gekennzeichnet, daß**
eine Auswerteelektronik vorgesehen ist zur Messung und zur Überwachung der mit zunehmendem Rußpartikelbelag und damit zunehmender Wärmeisolation sich ändernden Temperatur- bzw. Widerstandswerte des Sensors (4) und, bei Vorhandensein eines Rußpartikelfilters, zur Anzeige der Erfordernisse eines Austausches desselben bei Erreichen eines vorgegebenen Maximalbzw. Minimal-Temperatur bzw. Widerstandswerts des Sensors (4) einerseits und der Regenerierung des Sensors (4) durch Reinigung andererseits; oder, falls kein Rußpartikelfilter vorgeschaltet ist, zur Nachregelung der Abgasrückführwerte und/oder des Einspritzdrucks.

3. Verfahren zum Betrieb der Vorrichtung nach Anspruch 1 oder 2,
**dadurch gekennzeichnet, daß**
bei stillstehendem Motor und nach einer vorbestimmten Abkühlungszeit des Abgassystems der Sensor (4) auf eine vorbestimmte Ausgangstemperatur aufgeheizt und dann mit einem bestimmten Stromimpuls beaufschlagt, sein Temperatur- bzw. Widerstandswert nach einer bestimmten Zeitspanne gemessen und derselbe mit einem gespeicherten Temperatur- bzw. Widerstandsbasiswert des unverschmutzten Sensors (4) verglichen wird, wobei die Differenz der Werte als ein Maß für den Rußpartikelbelag auf dem Sensor (4) und damit als ein Maß entweder für die Partikelbelastung des unmittelbar vom Motor kommenden Abgasstroms (1) oder für den Belegungsgrad und damit die nachlassende Wirksamkeit eines vorhandenen Rußpartikelfilters verwendet wird, wobei eine vorbestimmte Größe der Differenz der Werte einen gegebenenfalls erforderlichen Austausch des Partikelfilters einerseits und/oder eine erforderliche Regenerierung des Sensors (4) andererseits anzuzeigen geeignet ist.

4. Verfahren nach Anspruch 3,
**dadurch gekennzeichnet, daß**
der Sensor (4) regeneriert und dabei vom Rußpartikelbelag gereinigt wird, sobald der Rußpartikelfilter erneuert wird.

5. Verfahren nach Anspruch 4,
**dadurch gekennzeichnet, daß**
zur Reinigung der Sensor (4) durch Anlegen eines dazu ausreichenden Stromes auf eine Temperatur aufgeheizt wird, bei welcher die anhaftenden Rußpartikel abbrennen und veraschen.

6. Verfahren nach Anspruch 5,
**dadurch gekennzeichnet, daß**
die Bestimmung des Aufheizungsstromes für den Sensor (4) nach Maßgabe des Vorhandenseins oder des Nichtvorhandenseins einer Additivierung des Kraftstoffes im Fahrbetrieb und der in Abhängigkeit davon zu erreichenden Verbrennungstemperatur erfolgt.

7. Verfahren nach einem der vorhergehenden Ansprüche,
**dadurch gekennzeichnet, daß**
nach einer Regenerierung des Sensors (4) sein dann vorhandener Temperatur- bzw. Widerstandsbasiswert zusammen mit einem entsprechend geänderten Maximal- bzw. Minimalwert neu gespeichert wird.
